(19) Europäisches Patentamt

European Patent Office

Office européen des brevets

(11) **EP 1 134 567 B1**

(12) **EUROPEAN PATENT SPECIFICATION**

(45) Date of publication and mention
of the grant of the patent:
**08.11.2006 Bulletin 2006/45**

(51) Int Cl.:
***G01L 3/10*** *(2006.01)* ***G01L 5/22*** *(2006.01)*
***G01D 5/20*** *(2006.01)*

(21) Application number: **01302388.2**

(22) Date of filing: **15.03.2001**

(54) **Non contacting torque sensor**

Berührungslos arbeitender Drehmomentaufnehmer

Détecteur de couple de rotation sans contact

(84) Designated Contracting States:
**DE FR GB**

(30) Priority: **16.03.2000 US 527088**

(43) Date of publication of application:
**19.09.2001 Bulletin 2001/38**

(73) Proprietor: **BEI Sensors & Systems Company, Inc.
Sylmar,
California 91342 (US)**

(72) Inventors:
• **Madni, Asad M.
Los Angeles, California 90064 (US)**
• **Vuong, Jim B.
Northridge, California 91326 (US)**
• **Wan, Lawrence A.
California 90265 (US)**
• **The other inventors have agreed to waive their
entitlement to designation.**

(74) Representative: **McLeish, Nicholas Alistair
Maxwell et al
Boult Wade Tennant
Verulam Gardens
70 Gray's Inn Road
London WC1X 8BT (GB)**

(56) References cited:
**US-A- 4 513 628        US-A- 4 680 976
US-A- 4 875 379**

**Description**

**INTRODUCTION:**

The present invention is directed to a non contacting torque sensor and specifically for a sensor that is especially useful for the steering columns of automobiles and other vehicles.

**BACKGROUND OF THE INVENTION:**

The never-ending demand for higher efficiency and higher reliability in automobiles, and the advent of the electrical vehicle (EV), have collectively doomed power hungry devices such as the Power Steering Hydraulic Pump and the Air Conditioning compressor. The best replacement for the Hydraulic Pump at this time is an electric motor to directly assist the steering effort. The problem now lies with reliably sensing the driver-applied torque so as to know how much steering assist to add. This could be accomplished with potentiometers, but the limited life of the contacting wipers is unacceptable in this very critical application. Another possibility is the use of optical encoders. While this would also perform the function, it is prohibitively expensive (especially absolute optical encoders), and the use of the light source is discouraged due to reliability considerations.

There is already known a device for sensing angular position or rotation of a steering column, as disclosed in co-pending application EP 1 083 408 A2 entitled Angular Position Sensor With Inductive Attenuating Coupler assigned to the present assignee.

US 4,680,976 describes a torque sensor for detecting the relative angular position of a shaft by using overlapping disks that transmit and receive high frequency signals.

US 4,875,379 describes a device for measuring the torque on a shaft using pulsed beams of light passing through measuring disks and light detectors.

US 4,513,628 describes a torque detector which detects the deformation of a spring by using electromagnetic pick-ups.

**OBJECT AND SUMMARY OF THE INVENTION:**

It is a general object of the present invention to provide an improved torque sensor and one of the non contacting type.

In accordance with the above invention there is provided a non-contacting torque sensor as described in Claim 1.

**BRIEF DESCRIPTION OF THE DRAWINGS:**

    Figure 1 is a side elevation view of a sensor incorporating the present invention.
    Figure 2 is a plan view of portions of Figure 1.
    Figure 3 is a plan view of another portion of Figure 1.
    Figures 4 is a simplified circuit schematic incorporating Figures 1, 2 and 3 illustrating the present invention..
    Figure 5 is a more detailed schematic of a portion of Figure 4.
    Figure 6 is a more detailed circuit schematic of a portion of Figure 4.
    Figures 7 is a circuit schematic of an OR gate of Figure 7 along with an explanatory table.
    Figure 8 is a characteristic curve along with explanatory timing diagram wave forms illustrating the operation of the present invention.

**DETAILED DESCRIPTION OF THE PREFERRED EMBODIMENTS:**

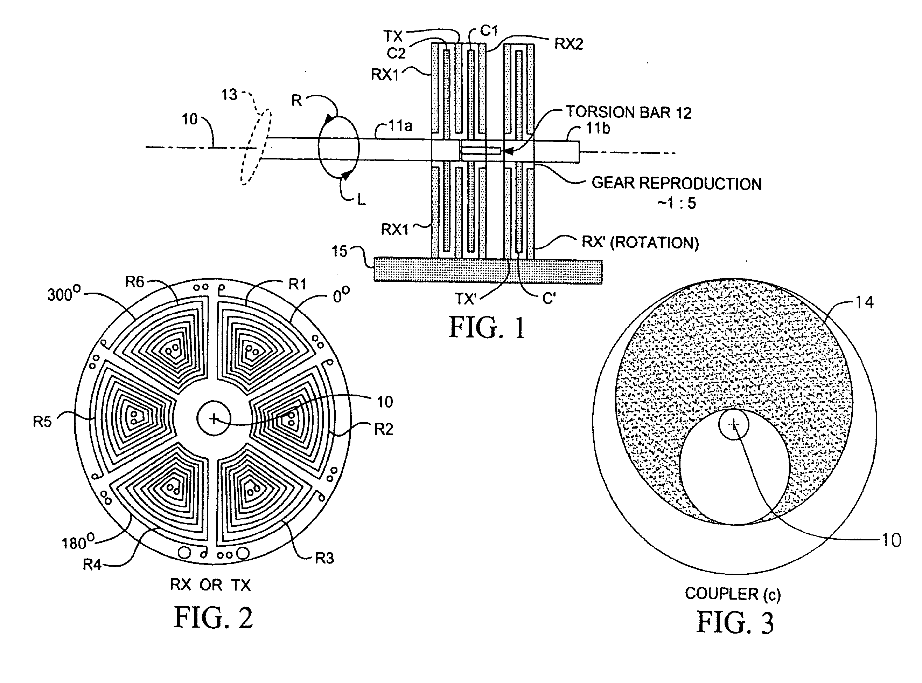

Referring now to Figure 1 the axis 10 includes the shaft 11 divided into a first portion 11a and a second portion 11b connected by a torsion bar 12. The shaft in the preferred embodiment would be driven by a nominally represented steering wheel 13. Mounted for rotation with and fixed to shaft portion 11a is a coupler disk C2. On shaft portion 11b, there is mounted a coupler disk C 1 and also C'. All of these are represented as coupler disk C illustrated in Figure 3. It is a disk made of insulating material such as plastic and includes a crescent-shaped symmetrical conductive pattern 14. The pattern and its use is discussed in the above co-pending patent application. All of the coupler disks are essentially identical. However, coupler disk C' is coupled to shaft portion 11b with a reduction gear (not specifically shown) with a 1:5 gear reduction. Thus in the case of a steering column of an automobile which may have a so-called lock to lock turn rotational distance of 2.25 turns, this gear reduction provides for a effective rotation of less than 360°. The output of this portion of the sensor that is C', TX' and RX' provides a measure of the angular rotation of the shaft in accordance with the above-mentioned patent application.

Fixed to a base 15, also in the form of an annular disk in relation to shafts 1 la and 11b are transmit and receive disks RX1, RX2, TX, RX1' and TX'. All are illustrated in Figure 2. All of the disks consist of six spiral loop antenna patterns designated 1 through 6 which are segmentally arranged in a circular pattern around the disk and circling the disk for a full 360°. Thus each coil in the form of a spiral loop antenna has been deformed to provide a 60° segment. The above patent application describes this in greater detail.

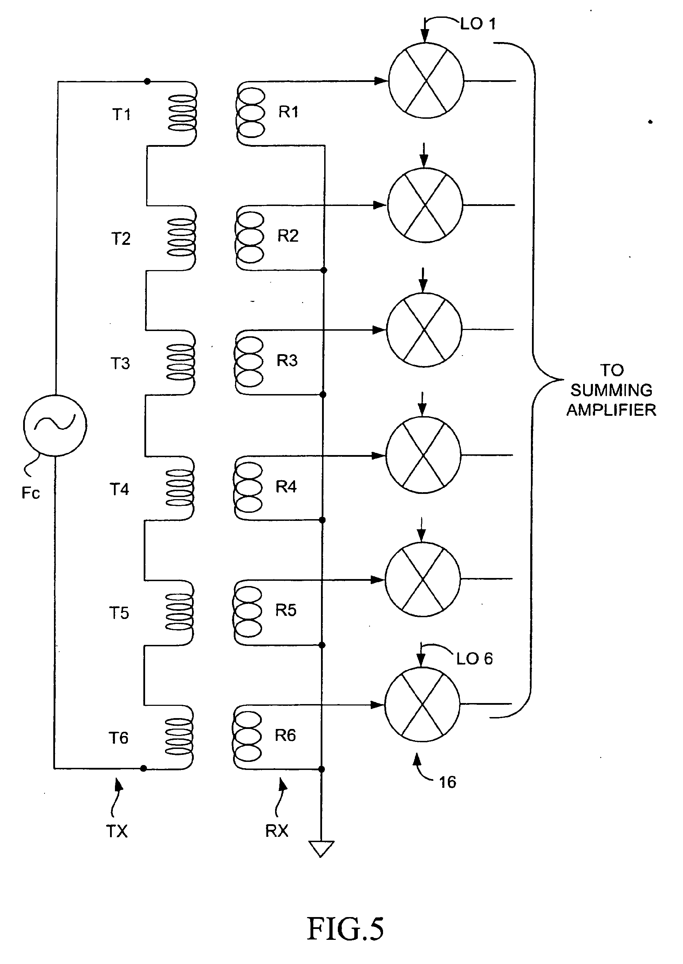

Figure 5 is a circuit diagram indicating how the receiver and transmit coils on disks RX and TX, the respective coils being labeled T1-T6, R1-R6 are inductively coupled to each other. This inductance is attenuated by either the couplers C1 or C2 or C'. An oscillator or signal source 17 supplies a signal, $F_c$, to the coils of the transmit disk TX. Since the coupler disk will interrupt and attenuate the signal amplitudes based on the coupler pattern with respect to the position of each receiver coil, six different amplitude signals are simultaneously generated at any one angular position of the coupler. These are demodulated in the mixer 16 by six different local oscillator signals L01-L06 which are shifted in phase from one another by 60°. They are then summed as will be explained below, to produce an instantaneous sinusoidal wave form, the phase of the wave form being proportional to the coupler's rotational position. Thus, by sensing the sequence of phase shifts, the rotation or angular position of the shaft can be measured as discussed in the above co-pending application. In addition, as will be discussed below, along with this rotational measurement, if a pair of measurements are taken on opposite sides of a torsion bar, the two output signals will indicate the same approximate degree of rotation, but with any phase difference being a measure of angular differential displacement of the two portions of the shaft.

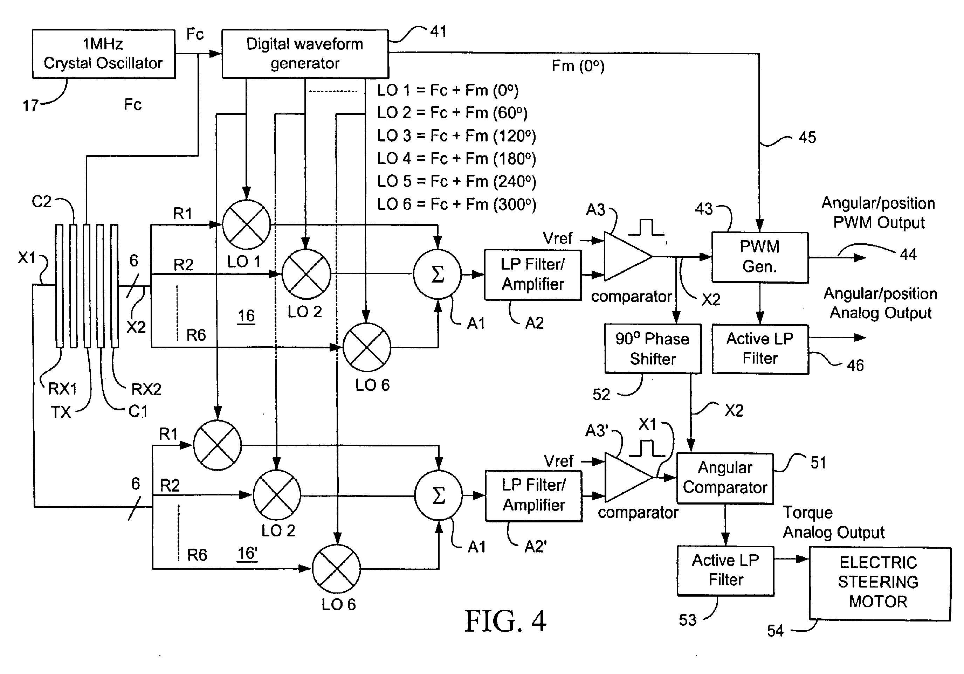

Figure 4 illustrates this in complete detail, which shows the various receivers, transmitters and couplers RX, TX and C. These are driven in a manner as in Figure 5, by a 1Mhz crystal oscillator 17 which drives a digital wave form generator 41. It's six output lines designated L01-L06 provide the six local oscillator signals which are shifted in phase from one another by 60°. These drive the six mixers 16 which are summed at summing amplifier A1. A low pass filter amplifier A2 drives a comparator A3 which turns the sinusoidal wave into a square wave X2 to drive a pulse width modulating generator 43 to provide on output line 44 a pulse width modulated (PWM) angular position output signal. When X2 is compared with a 0° reference signal on line 45, the PWM angular position signal results. This is all discussed in the above pending patent application where the PWM generator is an RS flip flop. An analog output is also derived from a filter 46. This is all from the X2 output side from the RX2 receive disk.

For the RX1 receive disk there is a similar mixer unit 16', low pass filter A2' and comparator A3' to produce an X1 square wave related to the position of the shaft.

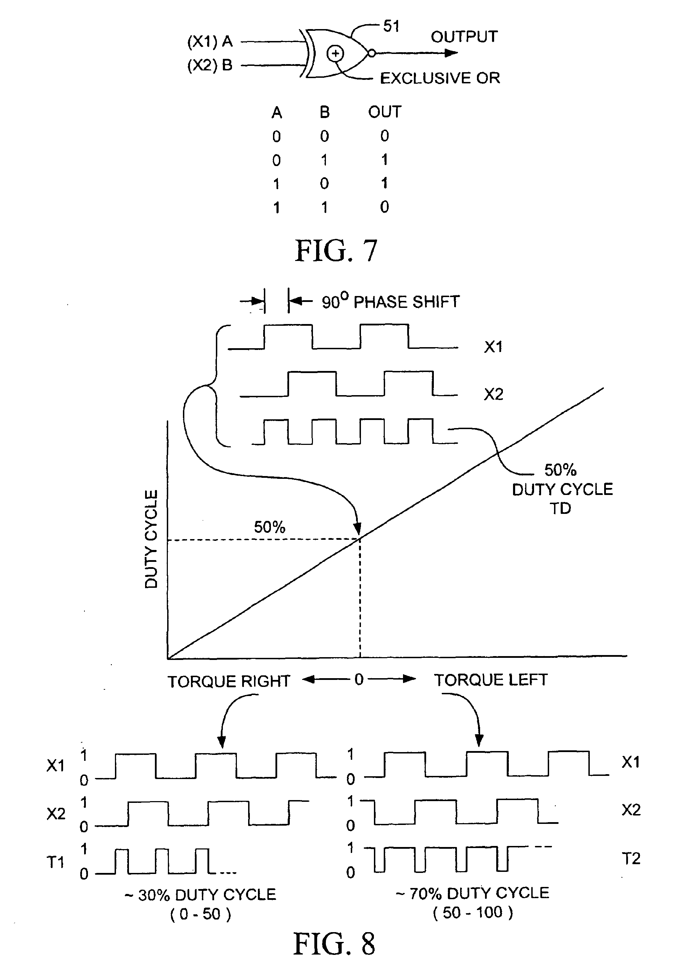

The X2 square wave is shifted 90° by a 90° phase shifter 52, both for preventing cross-over ambiguity at a 0° rotational position (where one coupler may be at 355° and the other at +5°) and at the same time to provide a simplified computational technique for clockwise and counter-clockwise (right and left) torque on the steering wheel. A 90° shift is preferred, but some other phase shift would work equally as well, for example 60°. The angular comparator 51 is illustrated in Figure 7 as an exclusive OR gate with the X1 and X2 inputs and operating in a manner so that only when there is a differential input is there an output, which is typical of exclusive OR gates. The output of this OR gate is filtered at 53 to provide a analog torque signal which may drive, for example, the electric steering motor of an automobile or other appropriate actuator device.

In summary, the torque signal is provided by and is proportional to the differential phase shift between X1 and X2. This is, of course, as discussed above a measure of the angular differential displacement of the two portions of the shaft.

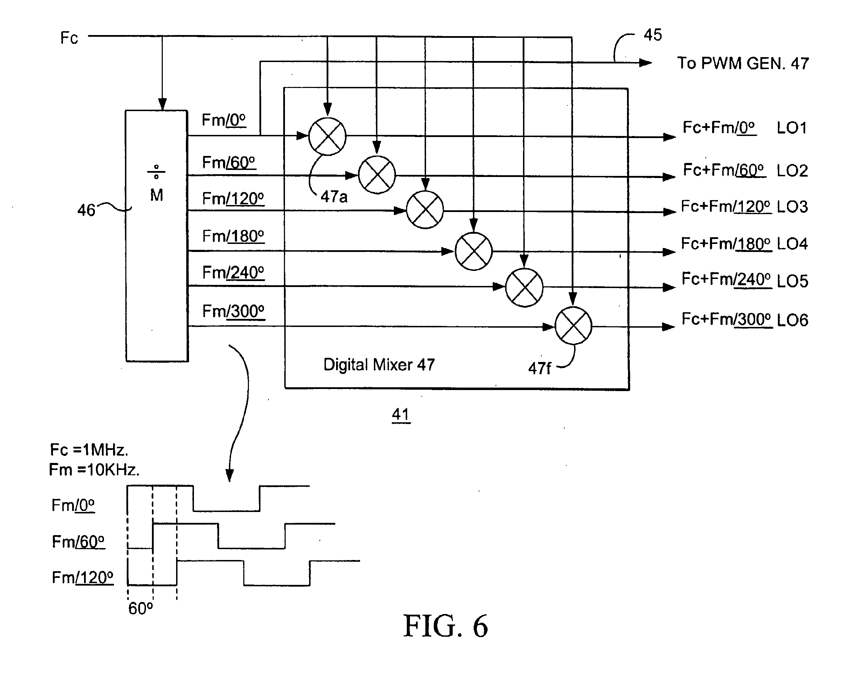

The digital waveform generator 41 of Figure 4 is shown in greater detail in Figure 6 where a divide by M Unit 48 provides 60° phase shifted signals $F_m$ which drive the respective mixers 47a-47f which also have the $F_c$ signal source as input to provide the final output signals.

Figure 8 illustrates the operation of the invention by a characteristic curve where at 0 torque the X1 and X2 signals are exactly phase shifted 90° (by 90° phase shifter 52) to produce an output waveform having a 50% duty cycle at zero torque. If the phase shift were different, for example 60°, then this would be a slightly different duty cycle. However, it is believed that the 90° phase shift providing the 50% duty cycle aptly and simply allows the electrical circuitry to provide a left and right torque in an efficient manner. In other words, the 90° phase shift causes the signal X1 to fall in the center of X2 at zero torque. For example, for torque right the associated waveforms show that the X2 square wave is shifted toward X1 from 50% down to 0%, the proportion of the shift or that duty cycle is indicated by the waveform T 1, as 30% (for example) to provide a linear indication of torque. Similarly for the torque left, the T2 curve is the result of the leading or lagging of X2 relative to X1 where the duty cycle is shown as 70% but may vary, of course, from 50% to 100% in a linear manner to illustrate the left-handed or counter-clockwise torque. Thus, the duty cycle or torque signal varies in a manner proportionate to the lead or lag of the two couplers. A typical differential angular displacement range of a drive shaft is $\pm 8°$ to $\pm 12°$. Thus the X1 and X2 signals would never cross over at the 180° point. Since the two receiver units RX1 and RX2 share the common transmitter, TX, there is very little error in the measurement process.

As an alternative to the duty cycle and square wave comparison of X1 and X2, as illustrated in Figure 4, is an analog angle comparison of analog output 46 with a similar analog output (not shown) of processed signal X1. But, without extensive signal processing, it would suffer greatly during the ambiguous transitioning period from 359° to 0°, where one is 359°, and the other is perhaps 3°. The elegant solution was to simply compare X1 and X2 square waves so that there never is any transition. However, in some applications an analog comparison may be feasible.

The foregoing technique of Figure 8 may also be mathematically proved by realizing that each RX1 and RX2 receive signals that have both a rotational component $\omega$ and an angular displacement component $\theta$. Assume that the RX1 output has an angular position $\theta_a$ and the RX2 output has an angular position $\theta_b$ with reference to 0°.

Then, the RX1 output is given by [1]:

$$\sum_{i=1}^{N} A_i / 2[Cos(\omega_o t + \theta_a) + Cos(\omega_o t - \theta_a)] \tag{1}$$

and, the RX2 output is given by:

$$\sum_{i=1}^{N} A_i / 2[Cos(\omega_o t + \theta_b) + Cos(\omega_o t - \theta_b)] \tag{2}$$

By taking the difference between these two outputs we get:

$$\sum_{i=1}^{N} A_i / 2[Cos(\omega_o t + \theta_a) + Cos(\omega_o t - \theta_a)]$$
$$- \sum_{i=1}^{N} A_i / 2[Cos(\omega_o t + \theta_b) + Cos(\omega_o t - \theta_b)] \tag{3}$$

Simplifying equation (3) above, we get:

$$\sum_{i=1}^{N} A_i / 2[Cos(\omega_o t + \theta_a) + Cos(\omega_o t - \theta_a)$$
$$- Cos(\omega_o t - \theta_b) - Cos(\omega_o t - \theta_b)] \tag{4}$$

Using the trigonometric identity:

$$Cos(A \pm B) = Cos\,A\,Cos\,B \mp Sin\,A\,Sin\,B \tag{5}$$

equation (4) may be rewritten as:

$$\sum_{i=1}^{N} A_i / 2[Cos\omega_o t\, Cos\theta_a - Sin\omega_o t Sin\theta_a + Cos\omega_o t Cos\theta_a +$$
$$Sin\omega_o t Sin\theta_a - Cos\omega_o t Cos\theta_b + Sin\omega_o t Sin\theta_b - \tag{6}$$
$$Cos\omega_o t Cos\theta_b - Sin\omega_o t Sin\theta_b]$$

Equation (6) reduces to:

$$\sum_{i=1}^{N} A_i / 2[2Cos\omega_o t Cos\theta_a - 2Cos\omega_o t Cos\theta_b] = \sum_{i=1}^{N} A_i[Cos\omega_o t Cos\theta_a - Cos\omega_o t Cos\theta_b] \qquad (7)$$

$$= \sum_{i=1}^{N} A_i Cos\omega_o t[Cos\theta_a - Cos\theta_b] \qquad (8)$$

where $A_1 Cos \omega_o t$ is the received signal indicative of the rotational component and $[Cos \theta_a - Cos \theta_b]$ is the torque component.

Thus the present invention provides a true non contacting differential angular displacement (torque) measurement.

**Claims**

1. A non contacting torque sensor for a shaft (11) having a torsion bar (12) connecting two portions (11a, 11b) of said shaft comprising:

   a transmit annular disk (Tx) surrounding said shaft and fixed for non rotation;
   a pair of annular coupler disks (C1, C2) mounted for rotation with said shaft on opposite sides of said torsion bar, each coupler disk being made of insulating material and including a crescent-shaped symmetrical conductive pattern; and
   a pair of fixed receiver annular disks (RX1, RX2) surrounding said shaft with said coupler disks between them, said pair of receiver disks being adapted to receive signals from said transmit disk through said coupler disks indicative of the rotation of said shaft

   wherein each of the transmit and receive disks comprises six spiral loop antenna coils that are segmentally arranged in a circular pattern around the disk and circling the disk for a full 360° such that each spiral loop antenna coil is deformed to provide a 60° segment,
   wherein the antenna coils on the transmit disk are inductively coupled to the antenna coils on the receive disk, such that in use the inductance is attenuated by the respective coupler disks having the crescent-shaped symmetrical conductive pattern such that six different amplitude signals are simultaneously generated at any one angular position of the sensor, the sensor further comprising means for angularly comparing said plurality of signals having different amplitudes from said pair of receiver disks to provide a torque signal indicative of the angular differential displacement of said shaft portions.

2. A torque sensor as in claim 1 where the transmit annular disk and the coupler disks are adapted to provide said signals to said receiver disks that have the same duty cycle with a phase shift between them proportional to the rotational differential displacement of said pair of coupler disks.

3. A torque sensor as in claim 2 where said means for angularly comparing said plurality of signals having different amplitudes is adapted to provide an output signal with a changing duty cycle which is proportional to the differential displacement of one coupler disk from the other whereby said torque signal is indicated.

4. A non contacting torque sensor as in claim 3 where said means for angularly comparing said plurality of signals having different amplitudes comprises an exclusive OR gate (51) for outputting the output signal with a changing duty cycle, whereby for clockwise or counter-clockwise rotation of the shaft said duty cycle respectively decreases or increases with respect to increase of torque.

**5.** A non contacting torque sensor as in claim 1 where said shaft is an automobile steering column which is not physically connected to the wheels of the automobile and where an electric motor controls the steering which is actuated by said torque signal.

**6.** A non contacting torque sensor as in claim 1 including means for shifting phase of at least one of said plurality of signals having different amplitudes by a fixed angle before said angularly comparing whereby crossover ambiguity is prevented.

**7.** A non contacting torque sensor as in claim 6 where said fixed angle is 90° and a zero torque has a 50% duty cycle.

**Patentansprüche**

**1.** Kontaktloser Drehmomentsensor für eine Welle (11) mit einer Torsionsstange (12), die zwei Abschnitte (11a, 11b) der Welle verbindet, umfassend:

eine ringförmige Übertragungsscheibe (Tx), welche die Welle umgibt und drehfest angebracht ist;
ein Paar ringförmiger Kopplungsscheiben (C1, C2), welche mit der Welle drehbar an entgegengesetzten Seiten der Torsionsstange angebracht sind, wobei jede Kopplungsscheibe aus einem Isolationsmaterial hergestellt ist und ein sichelförmiges, symmetrisches, Leiterbild aufweist; sowie
ein Paar fester, ringförmiger Empfängerscheiben (RX1, RX2), welche die Welle umgeben, wobei zwischen ihnen die Kopplungsscheiben angeordnet sind, wobei das Paar Empfängerscheiben dazu eingerichtet ist, durch die Kopplungsscheiben Signale von der Übertragungsscheibe zu empfangen, die die Drehung der Welle anzeigen,

wobei jede der Übertragungs- und Empfängerscheiben sechs Spiralschleifenantennenspulen umfasst, welche in Segmenten in einem kreisförmigen Muster um die Scheibe herum angeordnet sind und die Scheibe vollständig über 360° umkreisen, so dass jede Spiralschleifenantennenspule so verformt ist, dass sie ein 60°-Segment bildet, wobei die Antennenspulen auf der Übertragungsscheibe induktiv mit den Antennenspulen auf der Empfängerscheibe gekoppelt sind, so dass bei Verwendung die Induktivität durch die jeweiligen Kopplungsscheiben abgeschwächt wird, die das sichelförmige, symmetrische Leiterbild aufweisen, so dass in jeder beliebigen Winkelposition des Sensors sechs unterschiedliche Amplitudensignale gleichzeitig erzeugt werden,
wobei der Sensor ferner ein Mittel zum winkelbezogenen Vergleichen der Mehrzahl von Signalen mit unterschiedlichen Amplituden von dem Paar Empfängerscheiben umfasst, um ein Drehmomentsignal bereitzustellen, das den Winkeidifferenzversatz der Wellenabschnitte anzeigt.

**2.** Drehmomentsensor nach Anspruch 1, in welchem die ringförmige Übertragungsscheibe und die Kopplungsscheiben dazu eingerichtet sind, den Empfängerscheiben die Signale bereitzustellen, welche dasselbe Tastverhältnis aufweisen, wobei zwischen ihnen eine zum Winkeldifferenzversatz des Paars von Kopplungsscheiben proportionale Phasendifferenz ist.

**3.** Drehmomentsensor nach Anspruch 2, in welchem das Mittel zum winkelbezogenen Vergleichen der Mehrzahl von Signalen unterschiedlicher Amplitude dazu eingerichtet ist, ein Ausgabesignal mit einem sich ändernden Tastverhältnis bereitzustellen, welches proportional zum Differenzversatz einer Kopplungsscheibe von der anderen ist, wodurch das Drehmomentsignal angezeigt wird.

**4.** Kontaktloser Drehmomentsensor nach Anspruch 3, in welchem das Mittel zum winkelbezogenen Vergleichen der Mehrzahl von Signalen unterschiedlicher Amplituden ein Exklusiv-ODER-Gatter (51) zum Ausgeben des Ausgabesignals mit sich änderndem Tastverhältnis umfasst, wobei das Tastverhältnis für eine Drehung der Welle mit dem Uhrzeigersinn oder entgegen dem Uhrzeigersinn in Bezug auf eine Zunahme des Drehmoments jeweils abnimmt oder zunimmt.

**5.** Kontaktloser Drehmomentsensor nach Anspruch 1, in welchem die Welle eine Kraftfahrzeuglenksäule ist, welche nicht physikalisch mit den Rädern des Kraftfahrzeugs verbunden ist, und in welchem ein Elektromotor die Lenkung steuert/regelt, die durch das Drehmomentsignal betätigt wird.

**6.** Kontaktloser Drehmomentsensor nach Anspruch 1, welcher Mittel aufweist, um die Phase wenigstens eines der Mehrzahl von Signalen unterschiedlicher Amplituden vor dem winkelbezogenen Vergleichen um einen festen Winkel zu verschieben, wodurch Überschneidungsuneindeutigkeit verhindert wird.

7. Kontaktloser Drehmomentsensor nach Anspruch 6, in welchem der feste Winkel 90° beträgt und ein Null-Drehmoment ein Tastverhältnis von 50% aufweist.

## Revendications

1. Détecteur de couple sans contact pour un arbre (11) comportant une barre de torsion (12) raccordant deux parties (11a, 11b) dudit arbre, comprenant :

   un disque annulaire d'émission (Tx) entourant ledit arbre et fixé pour ne pas tourner ;
   une paire de disques de couplage annulaires (C1, C2) montés pour tourner avec ledit arbre sur les côtés opposés de ladite barre de torsion, chaque disque de couplage étant fabriqué dans un matériau isolant et comportant un motif conducteur symétrique en forme de croissant ; et
   une paire de disques annulaires de réception fixes (RX1, RX2) entourant ledit arbre avec lesdits disques de couplage entre eux, ladite paire de disques de réception étant adaptée pour recevoir des signaux dudit disque d'émission par l'intermédiaire desdits disques de couplage, indiquant la rotation dudit arbre,

   dans lequel chacun des disques d'émission et de réception comprend six bobines d'antenne cadre en spirale qui sont agencées en segments dans un motif circulaire autour du disque et qui encerclent le disque sur la totalité des 360°, de sorte que chaque bobine d'antenne cadre spirale est déformée pour fournir un segment de 60°,
   dans lequel les bobines d'antenne sur le disque d'émission sont couplées de façon inductive aux bobines d'antenne sur le disque de réception, de telle sorte que, à l'utilisation, l'inductance est atténuée par les disques de couplage respectifs comportant le motif conducteur symétrique en forme de croissant de telle sorte que six signaux d'amplitudes différentes sont générés simultanément à n'importe quelle position angulaire du détecteur, le détecteur comprenant en outre un moyen pour comparer angulairement ladite pluralité de signaux ayant des amplitudes différentes provenant de ladite paire de disques de réception pour fournir un signal de couple indiquant le déplacement différentiel angulaire desdites parties de l'arbre.

2. Détecteur de couple selon la revendication 1,
   dans lequel le disque annulaire d'émission et les disques de couplage sont adaptés pour fournir auxdits disques de réception lesdits signaux, lesquels ont le même rapport cyclique avec un décalage de phase entre eux proportionnel au déplacement différentiel de rotation de ladite paire de disques de couplage.

3. Détecteur de couple selon la revendication 2,
   dans lequel ledit moyen pour comparer angulairement ladite pluralité de signaux ayant des amplitudes différentes est adapté pour fournir un signal de sortie avec un rapport cyclique variable qui est proportionnel au déplacement différentiel d'un disque de couplage par rapport à l'autre, moyennant quoi ledit signal de couple est indiqué.

4. Détecteur de couple sans contact selon la revendication 3, dans lequel ledit moyen pour comparer angulairement ladite pluralité de signaux ayant des amplitudes différentes comprend une porte OU exclusif (51) pour sortir le signal de sortie avec un rapport cyclique variable, moyennant quoi, pour la rotation de l'arbre dans le sens des aiguilles d'une montre ou dans le sens contraire des aiguilles d'une montre, ledit rapport cyclique diminue ou augmente respectivement en fonction de l'augmentation de couple.

5. Détecteur de couple sans contact selon la revendication 1, dans lequel ledit arbre est une colonne de direction d'automobile qui n'est pas raccordée physiquement aux roues de l'automobile et dans lequel un moteur électrique commande la direction qui est actionnée par ledit signal de couple.

6. Détecteur de couple sans contact selon la revendication 1, comprenant un moyen pour décaler la phase d'au moins un de ladite pluralité de signaux ayant des amplitudes différentes d'un angle fixé avant ladite comparaison angulaire, moyennant quoi on empêche l'ambiguïté de croisement.

7. Détecteur de couple sans contact selon la revendication 6, dans lequel ledit angle fixé est de 90° et un couple nul possède un rapport cyclique de 50 %.

FIG. 1

FIG. 2

RX OR TX

FIG. 3

COUPLER (c)

FIG. 4

FIG.5

FIG. 6

(X1) A ⎯⎯⎯⎯⎯

(X2) B ⎯⎯⎯⎯⎯

51

OUTPUT

EXCLUSIVE OR

| A | B | OUT |
|---|---|-----|
| 0 | 0 | 0 |
| 0 | 1 | 1 |
| 1 | 0 | 1 |
| 1 | 1 | 0 |

## FIG. 7

90° PHASE SHIFT

X1

X2

50% DUTY CYCLE TD

DUTY CYCLE

50%

TORQUE RIGHT ◄⎯ 0 ⎯► TORQUE LEFT

X1  1  0

X2  1  0

T1  1  0

~ 30% DUTY CYCLE
( 0 - 50 )

X1  1  0

X2  1  0

T2  1  0

~ 70% DUTY CYCLE
( 50 - 100 )

X1

X2

## FIG. 8